# EUROPEAN PATENT APPLICATION

(11) **EP 4 245 598 A1**
(43) Date of publication of application: **20.09.2023**
(21) Application number: 23158558.9
(22) Date of filing: 24.02.2023
(51) Int. Cl.: B60L 53/31, B60L 53/57, H01M 50/204, H01M 50/502

(54) **HOUSEHOLD ENERGY STORAGE SYSTEM WITH CHARGING PILE**

(30) Priority: 14.03.2022 CN 202220566846 U
(71) Applicant: Sungrow Energy Storage Technology Co., Ltd., Hefei, Anhui 230088 (CN)
(72) Inventor: SHI, Xiang, Hefei (CN); XIAO, Jing, Hefei (CN)
(74) Representative: Zacco Norway AS

(57) **Abstract**

The present application discloses a household energy storage system with a charging pile, and relates to the technical field of charging and energy storage systems. The household energy storage system with a charging pile includes a charging pile and multiple energy storage battery modules, the multiple energy storage battery modules are stacked and electrically connected in sequence; the charging pile is stacked with the energy storage battery modules and is electrically connectable to an adjacent energy storage battery module and externally connectable to an electric vehicle. With the household energy storage system with a charging pile, not only the user's demands for normal electricity consumption and charging of an electric vehicle are met, but also an occupied floor area is reduced while facilitating disassembly and installation, thus improving usage experience of the user.

## Description

### FIELD

The present application relates to the technical field of charging and energy storage systems, and in particular to a household energy storage system with a charging pile.

### BACKGROUND

With the continuous development and utilization of clean energy such as solar energy and wind energy, a household energy storage system has been widely used in households. The household energy storage system is mainly used with a photovoltaic power generation system or a wind power generation system. In a case that power is generated by the photovoltaic power generation system or the wind power generation system, part of energy is used for household loads, and the energy except the part for the loads may be stored in the household energy storage system. The household energy storage system may provide a peak cut operating mode, thereby saving economic costs.

Electric vehicles are vehicles that are powered by an on-board power source and drive wheels with an electric motor to travel, meeting all requirements of road traffic and safety regulations. As the electric vehicles have a lower environmental impact than petrol-engine vehicles and can replace the usage of non-renewable energy of petrol, the electric vehicles are widely seen as a promising alternative and satisfy the requirements for a new energy strategy. Due to the limitation of number of public charging piles, household charging piles are required to be installed in many communities or personal residences. However, due to fixed electricity allocated to each household for the city electricity and a large amount of electricity required by a charging pile, it is not possible to meet the demands of users for normal electricity consumption and charging of electric vehicles at the same time.

### SUMMARY

The object of the present application is to provide a household energy storage system with a charging pile, with which not only the user's demands for normal electricity consumption and charging of an electric vehicle are met, but also an occupied floor area is reduced while facilitating disassembly and installation, thus improving usage experience of the user.

In order to achieve the above technical effects, the technical solution of the present application is as follows.

A household energy storage system with a charging pile is provided. The system includes:
multiple energy storage battery modules stacked and electrically connected in sequence; and
a charging pile stacked with the energy storage battery modules, where the charging pile is electrically connectable to an adjacent energy storage battery module and externally connectable to an electric vehicle.

In an embodiment, a DC-DC converter is arranged in the charging pile, the DC-DC converter is electrically connectable to the energy storage battery modules and is configured to convert a voltage of the energy storage battery modules to a voltage required for charging the electric vehicle.

In an embodiment, a charging plug is arranged on a side wall of the charging pile, and the charging pile is connected to the electric vehicle in a plug-in manner via the charging plug.

In an embodiment, the energy storage battery modules and the charging pile are all rectangular solid-shaped, and a width and a length of each of the energy storage battery modules are adapted to a width and a length of the charging pile, respectively.

In an embodiment, a first plug and a second plug that fit each other are arranged at the top and bottom of the energy storage battery modules and the charging pile respectively.

In an embodiment, a first plug base is arranged around the first plug of the energy storage battery modules and the charging pile, the first plug is arranged within a corresponding first plug base; a second plug base is arranged around the second plug of the energy storage battery modules and the charging pile; the second plug is arranged within a corresponding second plug base, the first plug base and the second plug base of two adjacent energy storage battery modules fit each other, and the second plug base of the charging pile and the first plug base of the energy storage battery modules are able to fit each other .

In an embodiment, a first handle that protrudes outwardly is provided at the top of each the energy storage battery modules, a first receiving groove for receiving the first handle of an adjacent energy storage battery module is arranged at the bottom of an energy storage battery module, and a second receiving groove for receiving the first handle of an adjacent energy storage battery module is arranged at the bottom of the charging pile.

In an embodiment, a second handle that protrudes outwardly is provided at a top of the charging pile.

In an embodiment, the household energy storage system with a charging pile further includes a base module, where the energy storage battery modules are detachably arranged on the base module, and the base module is configured to support the energy storage battery modules.

In an embodiment, the household energy storage system with a charging pile further includes a top cover module, where the top cover module is detachably arranged on the energy storage battery modules or the charging pile.

The following advantageous effects are obtained in the present application. A household energy storage system with a charging pile is provided according to the present application. The user's demands for normal electricity consumption and charging of an electric vehicle are met at the same time by the combination of the charging pile and the energy storage battery modules, and electricity consumption demands of different users can be met based on the number of the energy storage battery modules. The energy storage battery modules being stacked can reduce the occupied floor area as much as possible and improve a range of application. In addition, due to the charging pile being capable of stacked directly on the energy storage battery modules, it can greatly reduce the tedious installation, and also facilitate the user of selecting whether to use the charging pile or not, which improves the user's experience.

Additional aspects and advantages of the present application will be given in part in the following description, and will become apparent in part from the following description, or through the practice of the present application.

### BRIEF DESCRIPTION OF THE DRAWINGS

Figure 1 is a schematic view illustrating the structure of a household energy storage system with a charging pile according to an embodiment of the present application;
Figure 2 is a partial cross-sectional view of a household energy storage system with a charging pile according to an embodiment of the present application;
Figure 3 is an exploded view of a household energy storage system according to an embodiment of the present application; and
Figure 4 is a schematic view illustrating the structure of a first plug and a second plug according to an embodiment of the present application.

The reference numerals:
11 energy storage battery module; 111 first handle;
12 charging pile; 121 DC-DC converter; 122 charging plug; 123 second handle;
13 base module; 131 third handle;
14 top cover module;
101 first plug; 102 second plug; 103 first plug base; 104 second plug base.

### DETAILED DESCRIPTION OF THE EMBODIMENTS

The embodiments of the present application are described in detail below. Examples of embodiments are shown in the accompanying drawings, where the same or similar designations indicate the same or similar elements or elements with the same or similar functions throughout the description. The embodiments described below with reference to the drawings are exemplary, and are only used for explaining the present application, and should not be construed as a limitation for the present application.

In the description of the present application, terms "link", "connect" and "fix" should be understood in a broad sense, unless otherwise specifically defined. For example, it may be fixedly connected or detachably connected or integrally connected; it may be mechanically connected or electrically connected; it may be directly connected or indirectly connected through an intermediate media, or mutual connection between insides of two components, or the interaction relationship between the two components. For those skilled in the art, the specific meaning of the above terms in the present application may be understood in the light of specific circumstances.

In the present application, unless otherwise specified and limited, the description that a first feature is "on" or "under" a second feature may include direct contact between the first and second features, and may also include that the first and second features are not in direct contact but through another feature contact between them. Furthermore, the description that the first feature is "above", "over" and "on" the second feature includes that the first feature is directly above and obliquely above the second feature, or simply indicates that the first feature is higher in horizontal height than the second feature. The description that the first feature is "below", "under" and "down" the second feature includes that the first feature is directly below and obliquely below the second feature, or simply means that the first feature is lower in horizontal height than the second feature.

It should be understood that the orientation or positional relationships indicated by terms such as "center", "longitudinal", "lateral", "length", "width", "thickness", "up", "down", "front", "rear", "left", "right", "vertical", "horizontal", "top", "bottom", "inner", "outer", "clockwise", "anticlockwise", "axial", "radial", "circumferential" and the like are based on the orientation or positional relationships shown in the drawings, and are merely for the convenience of describing the present application and the simplification of the description, and do not indicate or imply that the device or component referred must be in a particular orientation, or be constructed and operated in a particular orientation, and therefore should not be construed as a limitation to the present application. In the description of the present application, unless stated otherwise, "multiple" means two or more. In addition, the terms "first" and "second" are only used to distinguish them in description, and have no special meaning. Terms "first position" and "second position" represent two different positions.

Technical solutions of the present application will be further described through the specific embodiments and in conjunction with drawings.

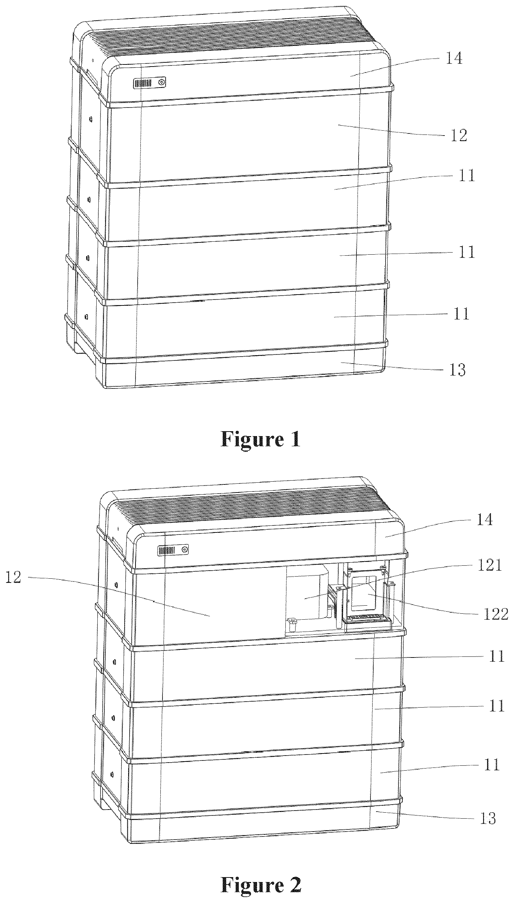

As shown in Figure 1, a household energy storage system with a charging pile is provided according to the present embodiment. The household energy storage system includes a charging pile 12 and multiple energy storage battery modules 11. The multiple energy storage battery modules 11 are stacked and electrically connected in sequence; the charging pile 12 is stacked with the energy storage battery modules 11 and is able to be electrically connectable to an adjacent energy storage battery module 11 and externally connectable to an electric vehicle.

It can be understood that the user's demands for normal electricity consumption and charging of an electric vehicle are met at the same time by the combination of the charging pile 12 and the energy storage battery modules 11, and electricity consumption demands of different users can be met based on the number of energy storage battery modules 11. The energy storage battery modules 11 being stacked can reduce an occupied floor area as much as possible and expand a range of application. In addition, compared to the charging pile 12 being fixed on the wall in the conventional technology, due to the charging pile 12 being capable of stacked directly on the energy storage battery modules 11 in the present embodiment, it can greatly reduce the tedious installation, and facilitate the user of selecting whether to use the charging pile 12 or not, which improves the user's experience.

Specifically, as shown in Figure 2, in order to charge the electric vehicle, a DC-DC converter 121 is provided in the charging pile 12. The DC-DC converter 121 is electrically connectable to the energy storage battery modules 11 and is configured to convert the voltage of the energy storage battery modules 11 into a voltage required for charging the electric vehicle.

Similarly, a charging plug 122 is arranged on a side wall of the charging pile 12, and the charging pile 12 is connected to the electric vehicle in a plug-in manner via the charging plug 122, which can be easily operated by the user due to the plug-in manner. That is, in a case that the electric vehicle needs to be charged, a plug of the electric vehicle may be inserted directly into the charging plug 122 and in a case that the electric vehicle is fully charged or no charging is required, the plug of the electric vehicle may be unplugged.

In an embodiment, the energy storage battery modules 11 and the charging pile 12 are all in rectangular solid-shaped, and a width and a length of each of the energy storage battery modules 11 are adapted to a width and a length of the charging pile 12, respectively, which facilitates the charging pile 12 of being directly mounted on the energy storage battery modules 11, thus ensuring that the entire household energy storage system with the charging pile 12 occupies as little space as possible and is aesthetic.

Further, the household energy storage system with a charging pile further includes a base module 13. The energy storage battery modules 11 are detachably arranged on the base module 13, and the base module 13 is configured to support the energy storage battery modules 11 in order to protect the energy storage battery modules 11.

Similarly, the household energy storage system with a charging pile further includes a top cover module 14, which can be detachably arranged on the energy storage battery modules 11 or the charging pile 12, thus providing protection. That is, when the user needs to use the charging pile 12, the required energy storage battery modules 11 may be firstly stacked on base assembly, then the charging pile 12 may be placed on a top energy storage battery module 11 and the top cover module 14 is mounted on the charging pile 12, thus completing the installation of the entire household energy storage system with a charging pile. When the user does not need to use the charging pile 12, the required energy storage battery modules 11 may be stacked on the base assembly and then the top cover module 14 may be mounted on the top energy storage battery module 11, thus completing the installation of the entire household energy storage system with a charging pile.

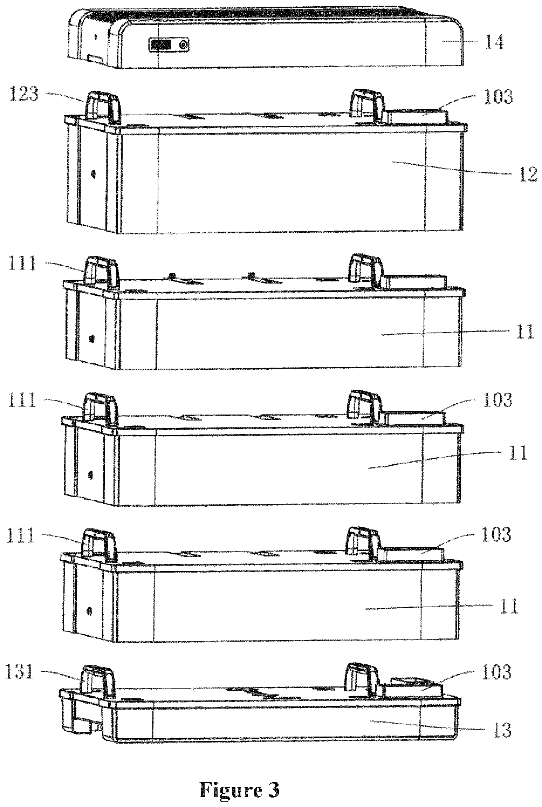

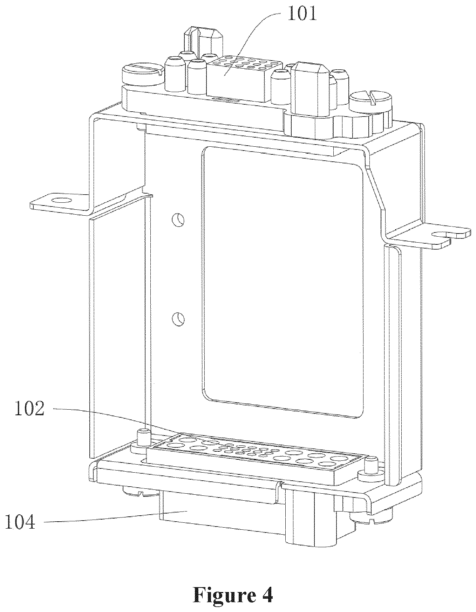

Specifically, as shown in Figures 3 and 4, in order to realize stacking between the energy storage battery modules 11 and between the energy storage battery modules 11 and the charging pile 12, a first plug 101 and a second plug 102 that fit each other are both arranged at the top and bottom of the energy storage battery modules 11 and the charging pile 12, respectively. The first plug 101 and the second plug 102 of two adjacent storage battery modules 11 are connected to each other so as to achieve an electrical connection therebetween. The second plug 102 of the charging pile 12 may be connected to the first plug 101 of the energy storage battery modules 11 to realize an electrical connection therebetween. In addition, the stacking of the energy storage battery modules 11 and the charging pile 12 ensures the stability and smooth electrical connection of the entire household energy storage system with a charging pile under the gravity of the energy storage battery modules 11 and the charging pile 12.

Similarly, in order to achieve a detachable connection between the base module 13 or the top cover module 14 and the energy storage battery modules 11 or the charging pile 12 respectively, a first plug 101 is arranged at the top of the base module 13 to fit with a second plug 102 and a second plug 102 is arranged at the bottom of the top cover module 14 to fit with a first plug 101, and thus the entire household energy storage system with a charging pile can be installed securely.

Further, a first plug base 103 is arranged around the first plug 101 of the energy storage battery modules 11 and the charging pile 12, the first plug 101 is arranged within a corresponding first plug base 103; a second plug base 104 is arranged around the second plug 102 of the energy storage battery modules 11 and the charging pile 12; the second plug 102 is arranged within a corresponding second plug base 104, the first plug base 103 and the second plug base 104 of two adjacent energy storage battery modules 11 fit each other, the first plug base 103 of the charging pile 12 is able to fit each other with the second plug base 104 of the energy storage battery modules 11, so that the first plug 101 and the second plug 102 can be protected by the first plug base 103 and the second plug base 104, respectively, and an contact area can be increased to ensure the stability of the connection between the energy storage battery modules 11 and the connection between the energy storage battery modules 11 and the charging pile 12.

Similarly, a first plug base 103 is also arranged around the first plug 101 of the base module 13, and a second plug base 104 is also arranged around the second plug 102 of the top cover module 14, thus further improving the stability of installation of the entire household energy storage system with a charging pile.

In an embodiment, a first handle 111, which protrudes outwardly, is provided at top each of the energy storage battery modules 11, a first receiving groove for receiving the first handle 111 of an adjacent energy storage battery module 11 is arranged at the bottom of an energy storage battery module 11, and a second receiving groove for receiving the first handle 111 of an adjacent energy storage battery module 11 is arranged at the bottom of the charging pile 12, to facilitate the movement of the energy storage battery modules 11 by the user. In the present embodiment, two first handles 111 are provided and are spaced arranged in a length direction of the energy storage battery modules 11, thus enabling the user to stably move the energy storage battery modules 11. It should be understood that the number and distribution of the first handles 111 may be adjusted according to actual requirements, and are not specifically limited in the present embodiment.

A first receiving groove for receiving the first handle 111 of an adjacent energy storage battery module 11 is also arranged at the bottom of the top cover module 14, thus ensuring that the top cover module 14 can be stably mounted on the energy storage battery modules 11.

Similarly, a second handle 123, which protrudes outwardly, is provided at the top of the charging pile 12 and a third receiving groove for receiving the second handle 123 is arranged at the bottom of the top cover module 14, thus facilitating the movement of the charging pile 12 by the user. In the present embodiment, two second handles 123 are provided and are spaced arranged along a length direction of the charging pile 12, thus enabling the user to stably move the charging pile 12. It should be understood that the number and distribution of the second handles 123 may be adjusted according to actual requirements, and are not specifically limited in the present embodiment.

In the present embodiment, since the first handle 111 and the second handle 123 have the same shape and are positioned in the same position on the energy storage battery modules 11 and the charging pile 12, respectively, the first and third receiving grooves of the top cover module 14 are the same receiving groove.

Similarly, a third handle 131, which protrudes outwardly, is provided at the top of the bottom cover module and a fourth receiving groove for receiving the third handle 131 is arranged at the bottom of the energy storage battery module 11, thus facilitating the user of moving the bottom cover module. In the present embodiment, two third handles 131 are provided and are spaced arranged along a length direction of the bottom cover module, thus enabling the user to stably move the bottom cover module. It should be understood that the number and distribution of the third handles 131 may be adjusted according to the actual needs, and are not specifically limited in the present embodiment.

In the present embodiment, since the first handle 111 and the third handle 131 have the same shape and are positioned in the same position on the energy storage battery modules 11 and the bottom cover module, respectively, the first and fourth receiving grooves of the energy storage battery modules 11 are the same receiving groove.

In the description of the specification, description with reference to the terms "embodiments", "other embodiments" or the like means that specific features, structures, materials or characteristics described in connection with the embodiment or example are included in at least one embodiment or example of the present application. In the specification, the schematic expressions of the above terms do not necessarily refer to the same embodiment or example. Furthermore, the specific features, structures, materials or characteristics described may be combined in any one or more embodiments or examples in a suitable manner.

The above is only a preferred embodiment of the present application. For those skilled in the art, the specific embodiments and scope of application may vary according to the ideas of the present application, and the contents of the description should not be construed as a limitation to the present application.

## Claims

1. A household energy storage system with a charging pile, comprising:
a plurality of energy storage battery modules (11) stacked and electrically connected in sequence; and
a charging pile (12) stacked with the energy storage battery modules (11), wherein the charging pile (12) is electrically connectable to an adjacent energy storage battery module (11) and externally connectable to an electric vehicle.

2. The household energy storage system with a charging pile according to claim 1, wherein a DC-DC converter (121) is arranged in the charging pile (12), the DC-DC converter (121) is electrically connectable to the energy storage battery modules (11) and is configured to convert a voltage of the energy storage battery modules (11) to a voltage required for charging the electric vehicle.

3. The household energy storage system with a charging pile according to claim 1, wherein a charging plug (122) is arranged on a side wall of the charging pile (12), and the charging pile (12) is connected to the electric vehicle in a plug-in manner via the charging plug (122).

4. The household energy storage system with a charging pile according to claim 1, wherein the energy storage battery modules (11) and the charging pile (12) are all in rectangular solid-shaped, and a width and a length of each of the energy storage battery modules (11) are adapted to a width and a length of the charging pile (12), respectively.

5. The household energy storage system with a charging pile according to any one of claims 1 to 4, wherein a first plug (101) and a second plug (102) that fit each other are arranged at the top and bottom of the energy storage battery modules (11) and the charging pile (12), respectively.

6. The household energy storage system with a charging pile according to claim 5, wherein a first plug base (103) is arranged around the first plug (101) of the energy storage battery modules (11) and the charging pile (12), the first plug (101) is arranged within a corresponding first plug base (103); a second plug base (104) is arranged around the second plug (102) of the energy storage battery modules (11) and the charging pile (12); the second plug (102) is arranged within a corresponding second plug base (104), the first plug base (103) and the second plug base (104) of two adjacent energy storage battery modules (11) fit each other, and the second plug base (104) of the charging pile (12) and the first plug base (103) of the energy storage battery modules (11) are able to fit each other.

7. The household energy storage system with a charging pile according to any one of claims 1 to 4, wherein a first handle (111) that protrudes outwardly is provided at a top of each energy storage battery modules (11), a first receiving groove for receiving the first handle (111) of an adjacent energy storage battery module (11) is arranged at the bottom of an energy storage battery module (11), and a second receiving groove for receiving the first handle (111) of an adjacent energy storage battery module (11) is arranged at the bottom of the charging pile (12).

8. The household energy storage system with a charging pile according to claim 7, wherein a second handle (123) that protrudes outwardly is provided at a top of the charging pile (12).

9. The household energy storage system with a charging pile according to claim 1, further comprising:
a base module (13), wherein the energy storage battery modules (11) are detachably arranged on the base module (13), and the base module (13) is configured to support the energy storage battery modules (11).

10. The household energy storage system with a charging pile according to claim 1, further comprising:
a top cover module (14), wherein the top cover module (14) is detachably arranged on the energy storage battery modules (11) or the charging pile (12).
